# EUROPÄISCHE PATENTSCHRIFT

(11) **EP 2 586 510 B1**
(45) Veröffentlichungstag und Bekanntmachung des Hinweises auf die Patenterteilung: **08.03.2017**
(21) Anmeldenummer: 12185331.1
(22) Anmeldetag: 21.09.2012
(51) Int. Cl.: B01D 27/10, B01D 29/21, B01D 35/147, B01D 35/153

(54) **Filterelement einer Filtereinrichtung und Filtereinrichtung**
Filter element of a filter device and filter device
Élément de filtration d'un dispositif filtrant et dispositif filtrant

(30) Priorität: 28.10.2011 DE 102011117173
(43) Veröffentlichungstag der Anmeldung: 01.05.2013
(73) Patentinhaber: MANN + HUMMEL GMBH, 71638 Ludwigsburg (DE)
(72) Erfinder: Moreno Linares, Andrés, 71067 Sindelfingen (DE); van Uffelen, Florentin, 71638 Ludwigsburg (DE); Mieß, Silke, 71640 Ludwigsburg (DE); Seidler, Gerhard, 71063 Sindelfingen (DE); Goedecke, Marco, 71691 Freiberg (DE)

(56) Entgegenhaltungen:
- FR-A1- 2 226 199
- US-A- 3 339 738
- US-B1- 6 284 130

## Beschreibung

### Technisches Gebiet

Die Erfindung betrifft ein Filterelement einer Filtereinrichtung zur Filtrierung eines Fluids, insbesondere Öl oder Kraftstoff, insbesondere einer Brennkraftmaschine insbesondere eines Kraftfahrzeugs, das in einem Filtergehäuse der Filtereinrichtung angeordnet werden kann, mit einem ringförmig geschlossenen Filtermedium, welches wenigstens an einer Stirnseite mit einem Endkörper verbunden ist, und mit einer ringförmigen Rücklaufsperrmembran, die auf der dem Filtermedium abgewandten Seite des wenigstens einen Endkörpers angeordnet ist, zum öffnen und schließen wenigstens einer Fluidöffnung des Filtergehäuses.

Die Erfindung betrifft ferner eine Filtereinrichtung zur Filtrierung eines Fluids, insbesondere Öl oder Kraftstoff, insbesondere einer Brennkraftmaschine insbesondere eines Kraftfahrzeugs, mit einem Filterelement, das in einem Filtergehäuse der Filtereinrichtung angeordnet ist, und das ein ringförmig geschlossenes Filtermedium aufweist, welches wenigstens an einer Stirnseite mit einem Endkörper verbunden ist, und mit einer ringförmigen Rücklaufsperrmembran, die auf der dem Filtermedium abgewandten Seite des wenigstens einen Endkörpers angeordnet ist, zum öffnen und schließen wenigstens einer Fluidöffnung des Filtergehäuses.

### Stand der Technik

Aus der WO 2009/060072 A1 ist ein Filterelement für den Einsatz in einem öffnenbaren Filtergehäuse bekannt. Das Filterelement weist ein ringförmig geschlossenes Filtermedium auf, welches stirnseitig mit einer oberen Endscheibe und einer unteren Endscheibe verbunden ist. Eine Rücklaufsperrmembran ist derart an der unteren Endscheibe angeordnet, dass sie in dem Filtergehäuse eine Einlassöffnung überdeckt. Im Normalbetrieb des Flüssigkeitsfilters strömt die zu reinigende Flüssigkeit durch die Einlassöffnung und hebt einen Dichtrand der Rücklaufsperrmembran von einer Fläche eines Gehäuseunterteils ab.

Durch die US 3,339,738 A1 ist ein Filter mit einer Rücklaufsperrmembran offenbart, welche in ihrem maximalen Öffnungszustand an einer Endkappe des Filterelements anliegt. Um eine Anhaftung zu vermeiden, weist die Endkappe Vorsprünge auf.

Der Erfindung liegt die Aufgabe zugrunde, ein Filterelement und eine Filtereinrichtung der eingangs genannten Art auszugestalten, bei der die Zuverlässigkeit, insbesondere das Ansprechverhalten, der Rücklaufsperrmembran weiter verbessert wird. Insbesondere soll möglichst die Verschleißanfälligkeit verringert werden.

### Offenbarung der Erfindung

Diese Aufgabe wird erfindungsgemäß dadurch gelöst, dass die Rücklaufsperrmembran in einem maximalen Öffnungszustand mit einer dem wenigstens einen Endkörper zugewandten Rückseite flächig an einer dieser Rückseite zugewandten Oberfläche eines Anlageabschnitts des wenigstens einen Endkörpers anliegt und die der Rückseite der Rücklaufsperrmembran zugewandte Oberfläche des Anlageabschnitts wenigstens einen reliefartigen Haftstörbereich aufweist zur Störung einer Haftung der Rücklaufsperrmembran an dem Anlageabschnitt des wenigstens einen Endkörpers.

Erfindungsgemäß ist also die Oberfläche des Anlageabschnitts nicht durchgängig glatt, sondern mit wenigstens einem reliefartigen Haftstörbereich ausgestattet. Auf diese Weise wird verhindert, dass sich die Rückseite der Rücklaufsperrmembran beim Anliegen am Anlageabschnitt in der Art eines Saugnapfs festsaugen kann oder in anderer Weise haften bleibt. So wird das Ansprechverhalten der Rücklaufsperrmembran insbesondere beim Übergang vom maximalen Öffnungszustand in den Schließzustand verbessert. Der reliefartige Haftstörbereich kann vorteilhafterweise Volumina aufweisen, die zur Rückseite der Rücklaufsperrmembran offen sind. Die offenen Volumina unterbrechen die ansonsten etwa gleichmäßige, insbesondere glatte, Oberfläche des Anlageabschnitts. So kann einem Festsaugen der Rückseite der Rücklaufsperrmembran an dem Anlageabschnitt des wenigstens einen Endkörpers entgegengewirkt werden. Dadurch, dass der Haftstörbereich an dem wenigstens einen Endkörpers angeordnet ist, kann die Rückseite der Rücklaufsperrmembran ansonsten gleichmäßig, insbesondere glatt, sein. Dies wirkt sich positiv auf ihre Flexibilität aus. Sie kann beim Öffnen und Schließen so gleichmäßig verformt, insbesondere gebogen, werden und einen gleichmäßigen Öffnungsvorgang und Schließvorgang ermöglichen. Die Rücklaufsperrmembran kann vorteilhafterweise im Ruhezustand, in dem sie die wenigstens eine Fluidöffnung abdichten kann, von der wenigstens einen Fluidöffnung aus betrachtet, konkav geformt sein. Eine Fluidströmung durch die Fluidöffnung zur Rücklaufsperrmembran hin kann die Rücklaufsperrmembran von der wenigstens einen Fluidöffnung abheben. Die Rücklaufsperrmembran kann durch die Fluidströmung elastisch zum wenigstens einen Endkörper hin gebogen werden. Die konkave Form bewirkt, dass die Rücklaufsperrmembran dabei elastisch gespannt wird. Die Rücklaufsperrmembran kann im Öffnungszustand flächig mit ihrer Rückseite am Anlageabschnitt anliegen. Der Anlageabschnitt kann als Anschlag für die Rücklaufsperrmembran dienen, um ein weiteres umklappen der Rücklaufsperrmembran zu verhindern. Durch das flächige Anliegen wird außerdem verhindert, dass die Rücklaufsperrmembran deformiert wird. Dies verringert den Verschleiß. Ferner kann so verhindert werden, dass die am Anlageabschnitt flächig anliegende Rücklaufsperrmembran in der Fluidströmung flattert, was sich ebenfalls positiv auf den Verschleiß der Rücklaufsperrmembran auswirkt. Bei Abbruch der Fluidströmung oder einer Umkehrung der Fluidströmung bewirkt die mechanische Spannung, dass die Rücklaufsperrmembran automatisch in den Ruhezustand zurückgekehrt und die wenigstens eine Fluidöffnung verschließt. So wird eine Rückströmung von Fluid in die wenigstens eine Fluidöffnung verhindert. Vorteilhafterweise kann der wenigstens eine Endkörper eine Endscheibe sein. Eine Endscheibe kann einfach und platzsparend realisiert werden. Vorteilhafterweise kann die Rücklaufsperrmembran radial innen oder radial außen mit dem wenigstens einen Endkörper verbunden sein.

Erfindungsgemäß weist der wenigstens eine Haftstörbereich wenigstens eine Vertiefung auf. Vertiefungen können einfach insbesondere beim Formen des wenigstens einen Endkörpers in einem Arbeitsgang eingeformt werden. Sie können auch nachträglich einoder angeformt werden. Vertiefungen können einfach in die Oberfläche des Endkörpers geschnitten, gebohrt, geätzt oder gefräst werden. Vertiefungen können einfach so ausgestaltet werden, dass sie, wenn die Rücklaufsperrmembran flächig an dem Anlageabschnitt anliegt, geringere Verformungen der Rückseite der Rücklaufsperrmembran verursachen als Erhebungen. Auf diese Weise kann der Verschleiß der Rücklaufsperrmembran weiter verringert werden.

Erfindungsgemäß ist die wenigstens eine Vertiefung kanalartig. Kanalartige Vertiefungen haben eine längliche Erstreckung, wobei ihre Länge größer ist als ihre Breite. Kanalartige Vertiefungen können sich im Anlageabschnitt erstrecken und verschiedene Bereich innerhalb des Anlageabschnitts fluidtechnisch miteinander verbinden. Bezüglich ihrer Breite beidseitig der wenigstens einen kanalartigen Vertiefung kann sich die Rückseite der Rücklaufsperrmembran an der Oberfläche des Anlageabschnitts abstützen. Verformungen der Rücklaufsperrmembran beim Anliegen an dem Anlageabschnitt des wenigstens einen Endkörpers können so weiter verringert werden.

Vorteilhafterweise kann eine Mehrzahl von kanalartigen Vertiefungen sich in dem Anlageabschnitt von radial innen nach radial außen erstrecken. Die kanalartigen Vertiefungen können vorteilhafterweise umfangsmäßig verteilt sein. Sie können gleichmäßig verteilt sein, sodass die Störung der Haftung über den gesamten Anlageabschnitt möglichst homogen sein kann. Dies kann das Ansprechverhalten der Rücklaufsperrmembran weiter verbessern.

Bei einer weiteren vorteilhaften Ausführungsform kann der Haftstörbereich eine Fluidverbindung in einen Bereich außerhalb des Anlageabschnitts aufweisen, gegebenenfalls kann die wenigstens eine kanalartige Vertiefung aus dem Anlageabschnitt heraus führen. Auf diese Weise kann beim Anliegen der Rücklaufsperrmembran am Anlageabschnitt einem etwa entstehenden Unterdruck, welcher zum festsaugen der Rücklaufsperrmembran am Anlageabschnitt führen kann, entgegengewirkt werden, indem Fluid von außerhalb des Anlageabschnitts über die wenigstens eine kanalartige Vertiefung dem Anlageabschnitt zuströmen kann.

Vorteilhafterweise kann eine Breite der wenigstens einen Vertiefung kleiner als 1 mm, vorzugsweise etwa 0,5 mm, und ihre Tiefe kleiner als 1 mm, vorzugsweise etwa 0,4 mm, sein. So kann ein flächiges, gleichmäßiges Anliegen der Rücklaufsperrmembran am Anlageabschnitt ermöglicht werden. Mit der wenigstens einen Vertiefung kann so ein optimaler Druckausgleich zur Verhinderung eines Unterdrucks zwischen der Rücklaufsperrmembran und dem Anlageabschnitt realisiert werden.

Die Aufgabe wird erfindungsgemäß ferner durch die Filtereinrichtung dadurch gelöst, dass die Rücklaufsperrmembran in einem maximalen Öffnungszustand mit einer dem wenigstens einen Endkörper zugewandten Rückseite flächig an einer dieser Rückseite zugewandten Oberfläche eines Anlageabschnitts des wenigstens einen Endkörpers anliegt und die der Rückseite der Rücklaufsperrmembran zugewandte Oberfläche des Anlageabschnitts wenigstens einen reliefartigen Haftstörbereich aufweist zur Störung einer Haftung der Rücklaufsperrmembran an dem Anlageabschnitt des wenigstens einen Endkörpers, wobei der wenigstens eine Haftstörbereich wenigstens eine kanalartige Vertiefung aufweist. Die oben im Zusammenhang mit dem erfindungsgemäßen Filterelement aufgezeigten Vorteile und Merkmale gelten für die erfindungsgemäße Filtereinrichtung und deren vorteilhafte Ausführungsformen entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: einen Schnitt eines Ölfilters einer Brennkraftmaschine eines Kraftfahrzeugs mit einem austauschbaren Rundfilterelement, das eine Rücklaufsperrmembran an einer unteren Endscheibe aufweist;
- Figur 2: einen Halbschnitt des Rundfilterelements aus der Figur 1;
- Figur 3: eine isometrische Darstellung des Rundfilterelements aus den Figuren 1 und 2 mit Sicht auf die untere Endscheibe mit der Rücklaufsperrmembran;
- Figur 4: eine Detailansicht der unteren Endscheibe mit der Rücklaufsperrmembran des Rundfilterelements aus den Figuren 1 bis 3;
- Figur 5: den Ölfilter aus Figur 1, wobei die Rücklaufsperrmembran im Öffnungszustand gezeigt ist.

In den Figuren sind gleiche Bauteile mit gleichen Bezugszeichen versehen.

### Ausführungsform(en) der Erfindung

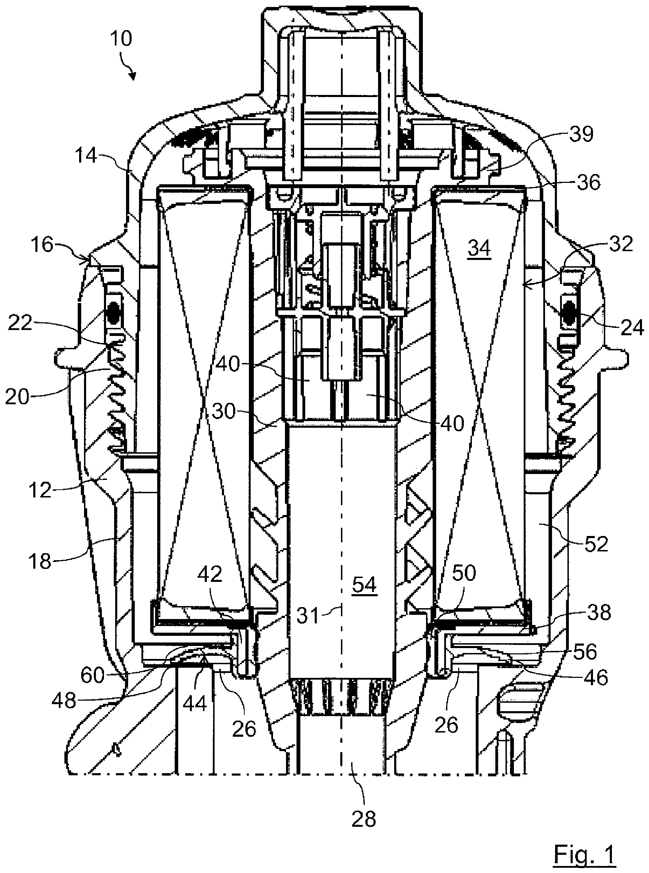

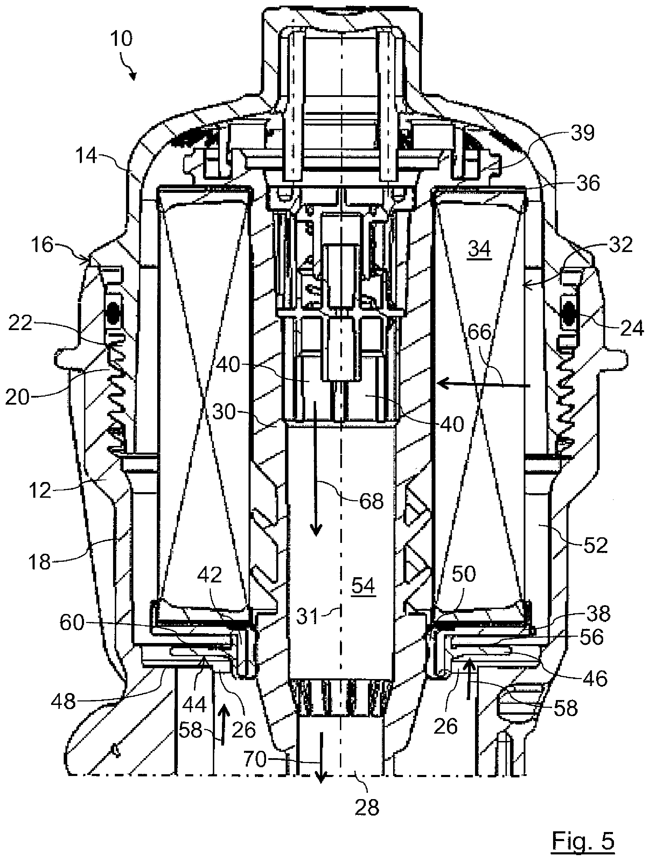

In den Figuren 1 und 5 ist ein Ölfilter 10 eines ansonsten nicht gezeigten Motorölkreislaufs einer Brennkraftmaschine eines Kraftfahrzeugs im Schnitt dargestellt. Der Ölfilter 10 dient zur Filtrierung des Motoröls.

Der Ölfilter 10 verfügt über ein Gehäuseunterteil 12 und ein Gehäuseoberteil 14 eines insgesamt mit 16 bezeichneten Filtergehäuses. Das Gehäuseunterteil 12 weist einen nach oben offenen Topf 18 auf, welcher an seiner Innenwand über ein Innengewinde 20 verfügt. In dieses Innengewinde 20 greift ein Außengewinde 22 des Gehäuseoberteils 14 ein, wodurch die Gehäuseteile 12 und 14 lösbar miteinander verbunden sind. Zur Abdichtung zwischen den Gehäuseteilen 12 und 14 ist ein O-Ring 24 vorgesehen.

Im Inneren des Gehäuseunterteils 12 ist eine Mehrzahl von Einlassöffnungen 26 für zu filtrierendes Motoröl und eine zentrale Auslassöffnung 28 für filtriertes Motoröl angeordnet. Die Auslassöffnung 28 ist mit dem Inneren eines Mittelrohrs 30 verbunden. Das Mittelrohr 30 ist koaxial zu einer Filterachse 31 angeordnet. Die Einlassöffnungen 26 befinden sich bezüglich der Filterachse 31 radial außerhalb des Mittelrohrs 30. Wenn im Folgenden von "radikal", "axial" oder "umfangsmäßig" die Rede ist, so bezieht sich dies, wenn nicht explizit anders beschrieben, auf die Filterachse 31.

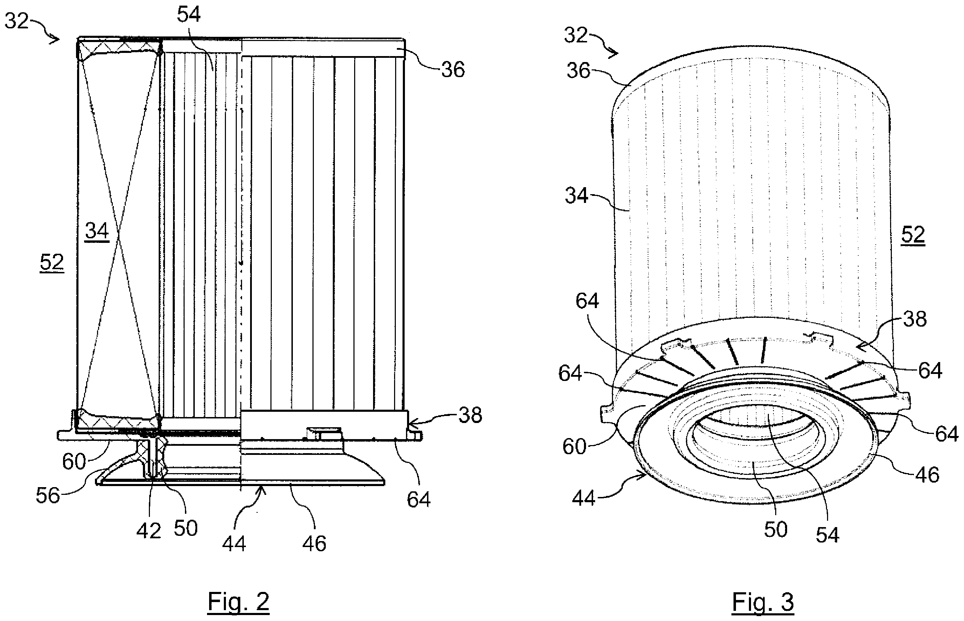

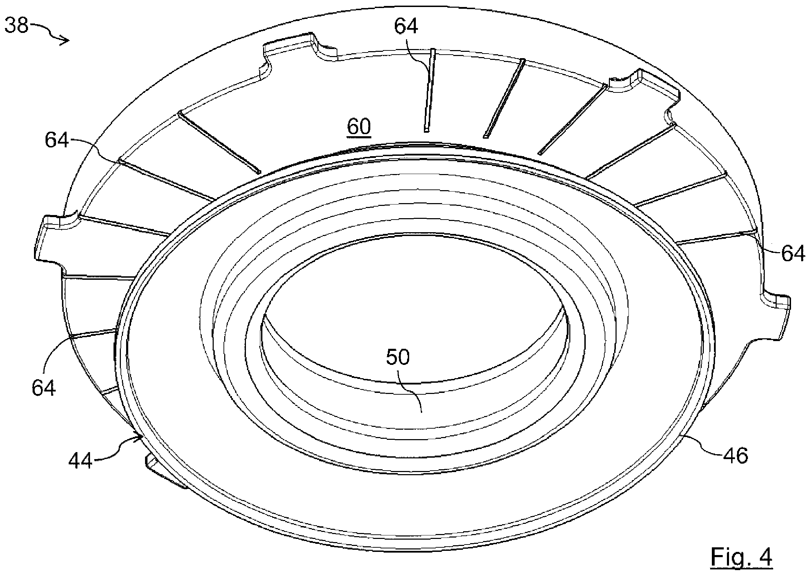

Auf dem Mittelrohr 30 steckt koaxial ein austauschbares Rundfilterelement 32. Das Rundfilterelement 32 verfügt über ein zickzackförmig gefaltetes und ringförmig geschlossenes Filtermedium 34. An seinen Stirnseiten ist das Filtermedium 34 mit einer oberen Endscheibe 36 und einer unteren Endscheibe 38 jeweils durch eine Verklebung dichtend verbunden. Die obere Endscheibe 36 liegt dicht an einem Stützkragen 39 des das Filtermedium 34 stützenden Mittelrohrs 30 an. Das Mittelrohr 30 weist eine Mehrzahl von Durchlassfenstern 40 auf, die für das Motoröl durchlässig sind. An der unteren Endscheibe 38 ist auf der dem Filtermedium 34 abgewandten Seite ein nach unten abstehender, durchgängiger ringförmiger Absatz 42 angeordnet. An dem Absatz 42 ist eine elastische, ringförmige Rücklaufsperrmembran 44 angespritzt. Die Rücklaufsperrmembran 44 ist im Detail auch in den Figuren 2 bis 4 gezeigt.

Die Rücklaufsperrmembran 44 ist von den Einlassöffnungen 26 aus betrachtet konkav gewölbt. Sie weist radial außen einen umlaufenden Dichtrand 46 auf, welcher sich im Schließzustand, der auch der Ruhezustand ist, wie in der Figur 1 gezeigt, auf einer umfangsmäßigen Dichtfläche 48 des Gehäuseunterteils 12 abstützt. Die Dichtfläche 48 umgibt die Einlassöffnungen 26 radial außen. An der radial inneren Umfangsseite des Absatzes 42 ist ein radial Dichtabschnitt 50 angeordnet, welcher sich auf der radial äußeren Umfangsseite des Mittelrohrs 30 dichtend abstützt. Dadurch erfolgt eine dichtendde Trennung zwischen einer Rohseite 52 und einer Reinseite 54 des Rundfilterelements 32. Die Reinseite 54 befindet sich im Inneren des Rundfilterelements 32, die Rohseite 52 außen.

Die Rücklaufsperrmembran 44 ist so gestaltet, dass sie bei einer Strömung des Motoröls durch die Einlassöffnungen 26, angedeutet in der Figur 5 durch Pfeile 58, zur unteren Endscheibe 38 hin gebogen werden kann. Eine den Einlassöffnungen 26 abgewandte Rückseite 56 der Rücklaufsperrmembran 44 kann dann flächig an der ihr zugewandten Oberfläche eines Anlageabschnitts 60 der unteren Endscheibe 38 anliegen. Der Anlageabschnitt 60 erstreckt sich einerseits umfangsmäßig und andererseits in radialer Richtung von dem Absatz 42 radial nach außen bis auf Höhe des Dichtrandes 46 der Rücklaufsperrmembran 44. Der Anlageabschnitt 60 erstreckt sich also über den Bereich, in dem die Rückseite 56 der Rücklaufsperrmembran 44 in ihrem, in der Figur 5 gezeigten, maximalen Öffnungszustand an der unteren Endscheibe 38 anliegen kann.

Im Anlageabschnitt 60 ist eine Mehrzahl von reliefartigen Haftstörbereichen in Form von kanalartigen Vertiefungen 64 angeordnet. Die Vertiefungen 64 sind in den Figuren 2 bis 4 im Detail gezeigt. Die Vertiefungen 64 sind in Gruppen umfangsmäßig verteilt in der Oberfläche der unteren Endscheibe 38 angeordnet. Die Vertiefungen 64 erstrecken sich radial zur Filterachse 31 etwa vom Absatz 42 bis zum radial äußeren Rand der unteren Endscheibe 38. Sie sind zur radial äußeren Umfangsseite der unteren Endscheibe 38 offen. Die Vertiefungen 64 führen also aus dem Anlageabschnitt 60 heraus zur Rohseite 52.

Die Ausdehnung der Vertiefungen 64 in Umfangsrichtung, also deren Breite, ist jeweils kleiner als 1 mm, vorzugsweise etwa 0,5 mm. Ihre Tiefe in axialer Richtung ist jeweils kleiner als 1 mm, vorzugsweise etwa 0,4 mm. Auf diese Weise kann die Rückseite 56 der Rücklaufsperrmembran 44 flächig an den Anlageabschnitts 60 anliegen, ohne dass die Rücklaufsperrmembran 44 im Bereich der Vertiefungen 64 verformt wird. Die Auflagefläche der Rücklaufsperrmembran 44 an dem Anlageabschnitt 60 im Verhältnis zur Breite der Vertiefungen 64 so groß, dass die Rücklaufsperrmembran 44 nicht in die Vertiefungen 64 eingedrückt werden kann.

Beim Betrieb des Ölfilters 10 drückt das durch die Einlassöffnungen 26 strömende zu reinigende Motoröl die Rücklaufsperrmembran 44 in dem maximalen Öffnungszustand, wie in der Figur 5 gezeigt, gegen den Anlageabschnitt 60 und gibt so die Einlassöffnungen 26 frei. Die Rücklaufsperrmembran 44 im Öffnungszustand unter einer mechanischen Spannung. Das Motoröl strömt der Rohseite 52 zu und von dort, von radial außen, in der Figur 5 angedeutet durch einen Pfeil 66, durch das Filtermedium 34, wo es gereinigt wird, nach radial innen und durch die Durchlassfenster 40 in den Innenraum des Mittelrohrs 30. Von dort aus gelangt das gereinigte Motoröl, angedeutet durch einen Pfeil 68 und einen Pfeil 70, durch die Auslassöffnung 28 aus dem Filtergehäuse 16 heraus und wird dem Motorölkreislauf zugeführt.

Im Ruhezustand, wenn kein Motoröl durch die Einlassöffnungen 26 strömt, liegt, wie in der Figur des Vereins gezeigt, der Dichtrand 46 dichtend auf der Dichtfläche 48 an und verhindert so, dass Motoröl von der Rohseite 52 zurück in die Einlassöffnungen 26 fließt. Durch die Rücklaufsperrmembran 44 wird somit ein Leerlaufen des Filtergehäuses 16 verhindert, wodurch bei einem Neustart der Brennkraftmaschine sofort Motoröl zur Verfügung steht.

Bei einem Übergang vom Öffnungszustand in den Ruhezustand beispielsweise beim Abbruch der Ölströmung, wie dies beispielsweise bei einem Betriebsstopp der Brennkraftmaschine der Fall ist, wird die Rücklaufsperrmembran 44 aufgrund ihrer mechanischen Spannung von dem Anlageabschnitt 60 zurück zur Dichtfläche 48 gebogen. Die Vertiefungen 64 verhindern dabei, dass sich die Rückseite 56 der Rücklaufsperrmembran 44 an dem Anlageabschnitt 60 festsaugen kann. Durch die Vertiefungen 64 kann Motoröl von der Rohseite 52 außerhalb des Anlageabschnitts 60 dem Bereich zwischen dem Anlageabschnitt 60 und der Rückseite 56 der Rücklaufsperrmembran 44 zufließen. Einem etwa aufkommenden Unterdruck wird so entgegengewirkt. Dieser Zufluss von Motoröl über die Vertiefungen 64 unterstützt außerdem die Zurückbewegung der Rücklaufsperrmembran 44 zur Dichtfläche 48 hin.

Bei dem oben beschriebenen Ausführungsbeispiel eines Ölfilters 10 und eines Rundfilterelements 32 sind unter anderem folgende Modifikationen möglich:
Die Erfindung ist nicht beschränkt auf einen Ölfilter 10 von Brennkraftmaschinen von Kraftfahrzeugen. Vielmehr kann sie auch bei andersartigen Flüssigkeitsfiltern, beispielsweise für Wasser oder Kraftstoff, eingesetzt werden. Statt bei Brennkraftmaschinen für Kraftfahrzeuge kann sie auch bei andersartigen Brennkraftmaschinen, beispielsweise Industriemotoren, eingesetzt werden.

Die Erfindung kann auch bei einem nicht öffenbaren Ölfilter 10 und einem nicht austauschbaren Filterelement 32 eingesetzt werden.

Die Rücklaufsperrmembran 44 kann statt am Absatz 26 angespritzt auch in anderer Weise mit der unteren Endscheibe 38 verbunden sein. Beispielsweise kann sie auch geklebt, geschweißt oder einstückig mit der unteren Endscheibe 38 verbunden sein.

Die Rücklaufsperrmembran 44 kann statt radial innen auch radial außen mit der unteren Endscheibe 38 verbunden sein.

Der reliefartige Haftstörbereich kann zusätzlich zu den kanalartigen Vertiefungen 64 auch andersartige reliefartige Strukturen aufweisen.

Zusätzlich zu den Vertiefungen 64 können auch Erhebungen in der Oberfläche der unteren Endscheibe 38 im Bereich des Auflageabschnitts 60 angeordnet sein, um den reliefartigen Haftstörungsbereich zu realisieren.

Die Vertiefungen 64 können statt radial auch schräg, gebogen oder mäandernd von radial innen nach radial außen verlaufen.

Die Vertiefungen 64 können statt aus dem Anlageabschnitt 60 heraus zu führen, auch gänzlich innerhalb des Anlageabschnitts 60 angeordnet sein.

Die obere Endscheibe 36 und/oder die untere Endscheibe 38 können auch in anderer Weise als durch eine jeweilige Verklebung mit dem Filtermedium 34 dichtend verbunden sein. Es kann auch nur eine untere Endscheibe 38 vorgesehen sein.

Die Rücklaufsperrmembran 44 kann statt an der unteren Endscheibe 38 auch an der oberen Endscheibe 36 angeordnet sein.

Anstelle der Endscheiben 36 und 38 können auch andersartige Endkörper vorgesehen sein.

Das Filtermedium 34 kann statt zickzackförmig gefaltet auch in anderer Weise ringförmig geschlossen sein.

Statt des Rundfilterelements 32 kann auch ein andersartiges ringförmiges, beispielsweise ovales oder eckiges, Filterelement eingesetzt werden.

## Patentansprüche

1. Filterelement (32) einer Filtereinrichtung (10) zur Filtrierung eines Fluids, insbesondere Öl oder Kraftstoff, insbesondere einer Brennkraftmaschine insbesondere eines Kraftfahrzeugs, das in einem Filtergehäuse (16) der Filtereinrichtung (10) angeordnet werden kann, mit einem ringförmig geschlossenen Filtermedium (34), welches wenigstens an einer Stirnseite mit einem Endkörper (36, 38) verbunden ist, und mit einer ringförmigen Rücklaufsperrmembran (44), die auf der dem Filtermedium (34) abgewandten Seite des wenigstens einen Endkörpers (38) angeordnet ist, zum öffnen und schließen wenigstens einer Fluidöffnung (26) des Filtergehäuses (16), wobei die Rücklaufsperrmembran (44) in einem maximalen Öffnungszustand mit einer dem wenigstens einen Endkörper (38) zugewandten Rückseite (56), insbesondere flächig, an einer dieser Rückseite (56) zugewandten Oberfläche eines Anlageabschnitts (60) des wenigstens einen Endkörpers (38) anliegt und die der Rückseite (56) der Rücklaufsperrmembran (44) zugewandte Oberfläche des Anlageabschnitts (60) wenigstens einen reliefartigen Haftstörbereich (64) aufweist zur Störung einer Haftung der Rücklaufsperrmembran (44) an dem Anlageabschnitt (60) des wenigstens einen Endkörpers (38), **dadurch gekennzeichnet, dass** der wenigstens eine Haftstörbereich wenigstens eine kanalartige Vertiefung (64) aufweist.

2. Filterelement nach Anspruch 1, **dadurch gekennzeichnet, dass** eine Mehrzahl von kanalartigen Vertiefungen (64) sich in dem Anlageabschnitt (60) von radial innen nach radial außen erstrecken.

3. Filterelement nach einem der vorigen Ansprüche, **dadurch gekennzeichnet, dass** der Haftstörbereich eine Fluidverbindung in einen Bereich außerhalb des Anlageabschnitts aufweist, gegebenenfalls die wenigstens eine kanalartige Vertiefung (64) aus dem Anlageabschnitt (60) heraus führt.

4. Filterelement nach einem der Ansprüche 1 bis 3, **dadurch gekennzeichnet, dass** eine Breite der wenigstens einen Vertiefung (64) kleiner als 1 mm, vorzugsweise etwa 0,5 mm, und ihre Tiefe kleiner als 1 mm, vorzugsweise etwa 0,4 mm, ist.

5. Filtereinrichtung (10) zur Filtrierung eines Fluids, insbesondere Öl oder Kraftstoff, insbesondere einer Brennkraftmaschine insbesondere eines Kraftfahrzeugs, mit einem Filterelement (32) gemäß einem der vorigen Ansprüche, das in einem Filtergehäuse (16) der Filtereinrichtung (10) angeordnet ist.

## Claims

1. Filter element (32) of a filtering device (10) for filtering a fluid, in particular oil or fuel, in particular of an internal combustion engine in particular of a motor vehicle which can be disposed in a filter housing (16) of the filtering device (10), with an annularly closed filter medium (34) which is connected on at least one front side with an end body (36, 38) and with an annular anti-drain membrane (44) which is disposed on the side facing away from the filter medium (34) of the at least one end body (38), for opening and closing at least one fluid opening (26) of the filter housing (16), wherein the anti-drain membrane (44) abuts in a maximum opening state with a backside (56) facing towards the at least one end body (38), in particular flat, on a surface facing towards this backside (56) of a locating section (60) of the at least one end body (38) and the surface facing towards the backside (56) of the anti-drain membrane (44) of the locating section (60) features at least one relief-like adhesion disturbance area (64) for avoiding an adhesion of the anti-drain membrane (44) at the locating section (60) of the at least one end body (38), **characterized in that** the at least one adhesion disturbance area features at least one channel-like recess (64).

2. Filter element according to claim 1, **characterized in that** a plurality of channel-like recesses (64) extend in the locating section (60) from radially inside to radially outside.

3. Filter element according to one of the above claims, **characterized in that** the adhesion disturbance area features a fluid connection in an area outside of the locating section, that possibly the at least one channel-like recess (64) leads out of the locating section (60).

4. Filter element according to one of the claims 1 to 3, **characterized in that** a width of the at least one recess (64) is smaller than 1 mm, preferably approximately 0.5 mm, and its depth smaller than 1 mm, preferably approximately 0.4 mm.

5. Filtering device (10) for filtering a fluid, in particular oil or fuel, in particular of an internal combustion engine in particular of a motor vehicle, with a filter element (32) according to one of the above claims which is disposed in a filter housing (16) of the filtering device (10).

## Revendications

1. Élément filtrant (32) d'un dispositif de filtration (10) destiné à filtrer un fluide, en particulier de l'huile ou du carburant, en particulier d'un moteur à combustion interne en particulier d'un véhicule automobile, lequel peut être disposé dans un boîtier de filtre (16) du dispositif de filtration (10), avec un milieu filtrant (34) de forme annulaire fermée qui est relié au moins sur une face frontale à un élément d'extrémité (36, 38), et avec une membrane antiretour (44) annulaire qui est disposée du côté opposé au milieu filtrant (34) de l'élément d'extrémité (38), au moins au nombre d'un, en vue de l'ouverture et de la fermeture d'au moins un orifice à fluide (26) du boîtier de filtre (16), la membrane antiretour (44) étant, en position d'ouverture maximale, au contact, avec une face arrière (56) orientée vers l'élément d'extrémité (38), au moins au nombre d'un, en particulier de manière plane, d'une surface orientée vers cette face arrière (56) d'une section de contact (60) de l'élément d'extrémité (38), au moins au nombre d'un, et la surface dirigée vers la face arrière (56) de la membrane antiretour (44) de la section de contact (60) présentant au moins une zone en relief anti-adhérence (64) évitant que la membrane antiretour (44) n'adhère à la section de contact (60) de l'élément d'extrémité (38), au moins au nombre d'un, **caractérisé en ce que** la zone anti-adhérence, au moins au nombre d'une, est pourvue d'au moins une cavité (64) en forme de canal.

2. Élément filtrant selon la revendication 1, **caractérisé en ce que** plusieurs cavités (64) en forme de canaux s'étendent dans la zone de contact (60), de l'intérieur en sens radial vers l'extérieur en sens radial.

3. Élément filtrant selon l'une des revendications précédentes, **caractérisé en ce que** la zone anti-adhérence comporte un conduit de fluide vers une zone située en dehors de la section de contact, lequel, le cas échéant, fait sortir la cavité (64) en forme de canal, au moins au nombre d'une, de la section de contact (60).

4. Élément filtrant selon l'une des revendications 1 à 3, **caractérisé en ce qu**'une largeur de la cavité (64), au moins au nombre d'une, est inférieure à 1 mm, de préférence de 0,5 mm environ, et que sa profondeur est inférieure à 1 mm, de préférence de 0,4 mm environ.

5. Dispositif de filtration (10) destiné à filtrer un fluide, en particulier de l'huile ou du carburant, en particulier d'un moteur à combustion interne en particulier d'un véhicule automobile, avec un élément filtrant (32) selon l'une des revendications précédentes qui est disposé dans un boîtier de filtre (16) du dispositif de filtration (10).
